# EUROPÄISCHE PATENTANMELDUNG

(11) **EP 4 353 133 A1**
(43) Veröffentlichungstag der Anmeldung: **17.04.2024**
(21) Anmeldenummer: 22200568.8
(22) Anmeldetag: 10.10.2022
(51) Int. Cl.: A47J 36/32

(54) **SYSTEM UND VERFAHREN ZUR VORHERSAGE EINES ZEITABHÄNGIGEN ZUSTANDS EINES NAHRUNGSMITTELS BEI DER ZUBEREITUNG**

(71) Anmelder: Vorwerk & Co. Interholding GmbH, 42270 Wuppertal (DE)
(72) Erfinder: STEIN, Matthias, 45472 Mülheim an der Ruhr (DE); HOSSE, Michael, 82380 Peißenberg (DE)
(74) Vertreter: Gille Hrabal Partnerschaftsgesellschaft mbB Patentanwälte

(57) **Zusammenfassung**

Die Erfindung betrifft ein System umfassend ein Küchengerät (1, 35) für die Zubereitung eines Nahrungsmittels (34) und eine Datenverarbeitungseinrichtung (9), die so eingerichtet ist, dass diese einen zeitabhängigen Zustand einer Zubereitung eines Nahrungsmittels (34) durch das Küchengerät (1, 35) vorhersagt, wobei die Datenverarbeitungseinrichtung (9) so eingerichtet ist, dass sich die Vorhersage im Anschluss an eine durchgeführte Zubereitung des Nahrungsmittels (34) durch das Küchengerät (1, 35) ändert.

Die Erfindung betrifft außerdem ein Verfahren für die Zubereitung eines Nahrungsmittels (34) mit dem System, wobei das Nahrungsmittel durch das Küchengerät (1, 35) des Systems zubereitet wird und einen Zeitraum für das Erreichen eines Zustands des Nahrungsmittels (34) durch das System vorhergesagt wird, wobei im Anschluss daran das gleiche Nahrungsmittel durch das Küchengerät (1, 35) des Systems erneut zubereitet wird und das System einen anderen Zeitraum für das Erreichen des Zustands des Nahrungsmittels (34) durch das System vorhergesagt.

## Beschreibung

Die Erfindung betrifft ein System und ein Verfahren zur Vorhersage eines zeitabhängigen Zustands eines Nahrungsmittels bei der Zubereitung durch ein Küchengerät.

Ein System zur Vorhersage eines zeitabhängigen Zustands eines Nahrungsmittels bei der Zubereitung durch ein Küchengerät kann einen Temperatursensor und eine Datenverarbeitungseinrichtung umfassen. Die Datenverarbeitungseinrichtung kann aus einer Speichereinheit eine Zieltemperatur auslesen. Die Zieltemperatur kann so sein, dass die Zubereitung des Nahrungsmittels fertiggestellt ist, wenn das Nahrungsmittel auf die Zieltemperatur gebracht worden ist. Während der Zubereitung kann der Temperatursensor die Temperatur in dem Nahrungsmittel messen und die gemessene Temperatur an die Datenverarbeitungseinrichtung senden. In Abhängigkeit von zwei aufeinanderfolgenden Temperaturmessungen kann die Datenverarbeitungseinrichtung die Zeitdauer bis zur Erreichung der Zieltemperatur extrapolieren, d.h. bis zur erwarteten Fertigstellung des Nahrungsmittels. Die Vorhersage der Zeit kann genutzt werden, um die Zubereitung weiterer Nahrungsmittel und/oder sonstiger Arbeitsprozesse zeitlich mit dem erwarteten Zeitpunkt der Fertigstellung des Nahrungsmittels abzustimmen.

Im Vergleich zu diesem beschriebenen System sollen Vorhersagen für das Erreichen eines zeitabhängigen Zustands eines Nahrungsmittels verbessert werden. Eine verbesserte Vorhersage hilft insbesondere, weitere für die Zubereitung relevante Aktivitäten und Prozesse verbessert zu koordinieren. Dies ermöglicht, die Qualität des zubereiteten Nahrungsmittels zu verbessern und/oder den Aufwand zur Zubereitung zu reduzieren.

Diese Aufgabe wird durch ein System nach Anspruch 1 und ein Verfahren mit den Merkmalen des Nebenanspruchs gelöst. Die abhängigen Ansprüche betreffen weitere Ausführungen des erfindungsgemäßen Systems, welche verbessert zur Lösung der Aufgabe beitragen.

Das erfindungsgemäße System umfasst ein Küchengerät für die Zubereitung von einem Nahrungsmittel und eine Datenverarbeitungseinrichtung. Die Datenverarbeitungseinrichtung kann so eingerichtet sein, dass diese einen zeitabhängigen Zustand einer Zubereitung von einem Nahrungsmittel durch das Küchengerät vorhersagt. Weiter kann die Datenverarbeitungseinrichtung so eingerichtet sein, dass sich die Vorhersage im Anschluss an eine durchgeführte Zubereitung des Nahrungsmittels durch das Küchengerät ändert.

Ein Küchengerät für die Zubereitung von einem Nahrungsmittel ist ein Gerät, welches in einer Küche zur Zubereitung von Nahrungsmitteln eingesetzt werden kann. Mit einem Küchengerät kann ein Nahrungsmittel bearbeitet werden, um so ein Nahrungsmittel zuzubereiten. Ein Nahrungsmittel kann eine Mehrzahl an Zutaten umfassen. Das Bearbeiten kann beispielsweise ein Erhitzen, ein Kühlen, ein Rühren und/oder ein Zerkleinern umfassen. Beispiele für ein Küchengerät, das für die Zubereitung von zumindest einem Nahrungsmittel eingesetzt werden kann, sind ein Backofen, ein Grill, eine Mikrowelle, ein Kaffeeautomat, ein Kochfeld, ein Kühlschrank oder ein Gefrierschrank.

Das Küchengerät kann eine Küchenmaschine sein. Eine Küchenmaschine umfasst ein Standteil und ein Zubereitungsgefäß. Im Zubereitungsgefäß kann ein Rühr- und/oder Schneidwerkzeug vorhanden sein. In das Zubereitungsgefäß kann eine Heizeinrichtung integriert sein. Das Zubereitungsgefäß kann in das Standteil eingesetzt und aus dem Standteil herausgenommen werden. Das Standteil kann einen elektrischen Antrieb für das Rühr- und/oder Schneidwerkzeug umfassen. Eine Küchenmaschine kann Nahrungsmittel durch Erhitzen und/oder durch Mischen und/oder durch Zerkleinern zubereiten.

Die Küchenmaschine kann ein zweites Werkzeug umfassen. Das zweite Werkzeug kann beispielsweise lösbar mit dem Rühr- und/oder Schneidwerkzeug verbunden werden. Die Verbindung zwischen dem Rühr- und/oder Schneidwerkzeug und dem zweiten Werkzeug kann so sein, dass für ein Verbinden sowie für ein Lösen kein Werkzeug erforderlich ist. Die Verbindung kann so sein, dass das zweite Werkzeug zusammen mit dem Rühr- und/oder Schneidwerkzeug gedreht werden kann. Das zweite Werkzeug kann beispielsweise eine Kartoffelschälscheibe, ein Gemüseschneider, ein in das Zubereitungsgefäß einsetzbarer Korb für ein Schleudern von Salat oder eine Saftpresse sein.

Der Gemüseschneider kann einen Auffangbehälter für zerschnittenes Gemüse und eine Schneidscheibe umfassen. Der Auffangbehälter kann während des Betriebs in das Zubereitungsgefäß eingesetzt sein.

Die Saftpresse kann einen Kegel umfassen, der in eine Frucht hineingedrückt werden kann. Durch Rotieren des Kegels kann die Frucht entsaftet werden.

Die Küchenmaschine kann einen Aufsatz umfassen, der auf das Zubereitungsgefäß aufgesetzt werden kann, um oberhalb des Zubereitungsgefäßes durch den Aufsatz einen Garraum bereitzustellen. Der Aufsatz kann einen Behälter oder eine Schale mit einem dampfdurchlässigen Boden und einen Deckel umfassen. Der Aufsatz kann als Dampfgarer genutzt werden.

Beispiele für Nahrungsmittel, die durch Erwärmen oder Erhitzen zubereitet werden können, sind Fleisch, Fisch oder Gemüse oder Teig für Backwaren. Ein Beispiel für ein Nahrungsmittel, welches durch Mischen und/oder Zerkleinern zubereitet werden kann, ist ein Salat. Ein Beispiel für ein Nahrungsmittel, das durch Gefrieren zubereitet werden kann, ist ein Speiseeis.

Ein zeitabhängiger Zustand eines Nahrungsmittels kann ein Steak sein, das wenig, mittel oder vollständig gebraten worden ist. Dieser Zustand hängt davon ab, wie lange das Steak bei welchen Temperaturen gebraten worden ist. Es handelt sich daher um einen zeitabhängigen Zustand. Ein zeitabhängiger Zustand eines Nahrungsmittels kann ein fertig gebackener Teig sein, da dieser Zustand davon abhängt, wie lange Teig bei welchen Temperaturen gebacken worden ist. Ein zeitabhängiger Zustand eines Nahrungsmittels kann ein fertig hergestellter Salat sein, da dieser Zustand davon abhängt, wie lange Zutaten für einen Salat mit welcher Geschwindigkeit gemischt und/oder zerkleinert worden sind.

Eine Datenverarbeitungseinrichtung ist eine Einrichtung, die elektrische und/oder elektronische Informationen verarbeiten kann. Eine Datenverarbeitungseinrichtung kann so eingerichtet sein, dass dieses ein analoges elektrisches Signal empfangen, digitalisieren und das digitalisierte Signal verarbeiten kann. Eine Datenverarbeitungseinrichtung kann so eingerichtet sein, dass dieses ein digitales Signal empfangen und verarbeiten kann. Eine Datenverarbeitungseinrichtung kann einen Mikroprozessor für ein Verarbeiten von Daten umfassen. Eine Datenverarbeitungseinrichtung kann einen elektronischen Speicher umfassen, in dem Informationen elektronisch gespeichert werden können. Eine Datenverarbeitungseinrichtung kann einen Microkontroller umfassen.

Das Küchengerät kann die Datenverarbeitungseinrichtung umfassen. Die Datenverarbeitungseinrichtung kann in dem Standteil der Küchenmaschine angeordnet sein. Die Datenverarbeitungseinrichtung kann alternativ räumlich von dem Küchengerät getrennt sein.

Die Datenverarbeitungseinrichtung kann so eingerichtet sein, dass die Datenverarbeitungseinrichtung auch den Betrieb des Küchengeräts steuern kann. Die Datenverarbeitungseinrichtung kann so eingerichtet sein, dass die Datenverarbeitungseinrichtung auch den elektrischen Antrieb und/oder die Heizeinrichtung der Küchenmaschine steuern kann.

Die Datenverarbeitungseinrichtung kann so eingerichtet sein, dass diese ein Nahrungsmittel mithilfe eines elektronisch gespeicherten Rezepts vollautomatisiert oder teilautomatisiert zubereiten kann.

Wurde ein Nahrungsmittel durch Erhitzen zubereitet, so ist im Anschluss an die Zubereitung bekannt, bei welcher Temperatur oder bei welchen Temperaturen wie lange das Nahrungsmittel durch Erhitzen zubereitet worden ist, um einen gewünschten zeitabhängigen Zustand zu erreichen. Damit kann vorhergesagt werden, welche Zeitdauer bei welchen Temperaturen benötigt wird, um ein gleiches Nahrungsmittel ein nächstes Mal so zuzubereiten, dass der gewünschte zeitabhängige Zustand erreicht wird. Diese Vorhersage ist allerding mit Unsicherheiten behaftet, da die genauen Zubereitungsumstände, wie z.B. der Zustand des Zubereitungsgeräts, die Zubereitungsgewohnheiten eines Nutzers einschließlich der bevorzugten speziellen Art des Nahrungsmittels unterschiedlich sein können. Weil die Datenverarbeitungseinrichtung so eingerichtet ist, dass diese im Anschluss an eine jede Zubereitung die Vorhersage ändern kann, kann die Datenverarbeitungseinrichtung eine Vorhersage verbessern. Es können Vorhersagen zunehmend genauer getroffen werden.

In einer Ausführung umfasst das erfindungsgemäße System einen Detektor. Der Detektor kann so eingerichtet sein, dass mit dem Detektor zumindest ein Zustandsparameter gemessen und an die Datenverarbeitungseinrichtung übermittelt werden kann. Insbesondere kann mit dem Detektor ein Zustandsparameter des Nahrungsmittels oder beim Nahrungsmittel während seiner Zubereitung durch das Küchengerät detektiert und an die Datenverarbeitungseinrichtung übermittelt werden. Die Datenverarbeitungseinrichtung kann so eingerichtet sein, dass diese den zeitabhängigen Zustand des Nahrungsmittels in Abhängigkeit von zumindest einem übermittelten Zustandsparameter vorhersagen kann. Alternativ oder ergänzend kann die Datenverarbeitungseinrichtung so eingerichtet sein, dass diese im Anschluss an eine durchgeführte Zubereitung des Nahrungsmittels die Vorhersage in Abhängigkeit von den während der Zubereitung des Nahrungsmittels übermittelten ein oder mehreren Zustandsparametern ändert.

Der Detektor ist ein technisches Bauteil, das einen Zustandsparameter eines Nahrungsmittels oder beim Nahrungsmittel, wie z. B. Temperatur, Feuchtigkeit, Wärmemenge, Bewegungsrichtung und/oder Bewegungsgeschwindigkeit, Viskosität, Druck, Leitfähigkeit, Transparenz, Gewicht, Form, Größe, Erscheinungsbild oder stoffliche Beschaffenheit, während der Zubereitung durch das Küchengerät erfassen und in ein elektrisches Signal umformen kann. Das Signal kann ein analoges Signal oder ein digitales Signal sein.

Da der Detektor während einer Zubereitung ein oder mehrere Zustandsparameter an die Datenverarbeitungseinrichtung übermittelt, kann die Datenverarbeitungseinrichtung Abweichungen von einer Vorhersage erkennen. Die Datenverarbeitungseinrichtung kann daher noch während einer Zubereitung eine Vorhersage ändern und damit zumindest während einer Zubereitung eine Vorhersage verbessern. Die Datenverarbeitungseinrichtung kann alternativ oder ergänzend eine zukünftige Vorhersage deshalb verbessern, weil die Datenverarbeitungseinrichtung die Änderungen des Zustandsparameters mit der Zeit zum Beispiel aufzeichnen und analysieren kann. So kann die Datenverarbeitungseinrichtung zum Beispiel aufgrund von Änderungen des Zustandsparameters mit der Zeit erkennen, ob ein geplanter Verlauf einer Zubereitung gestört worden ist, was zur Folge hatte, dass eine Vorhersage nicht eingehalten werden konnte. Dies kann dann beispielsweise zur Folge haben, dass die Datenverarbeitungseinrichtung eine Vorhersage für eine zukünftige Zubereitung nur dann ändert, wenn die Datenverarbeitungseinrichtung aufgrund des zeitlichen Verlaufs zu dem Ergebnis gekommen ist, dass der geplante Verlauf nicht gestört worden ist.

Die Datenverarbeitungseinrichtung kann Muster erkennen, wenn Störungen regelmäßig auftreten. Die Datenverarbeitungseinrichtung kann ein erkanntes Muster dazu nutzen, um eine Vorhersage zu ändern.

Der Detektor kann so eingerichtet sein, dass dieser mehrere Zustandsparameter messen kann. Der Detektor kann so eingerichtet, dass Zustandsparameter an räumlich unterschiedlichen Orten gemessen werden können, z.B. innerhalb eines Nahrungsmittels, an der Oberfläche eines Nahrungsmittels und/oder im Zubereitungsgefäß, Zubereitungsbehälter und/oder Zubereitungsraum außerhalb des Nahrungsmittels. Ein Detektor kann beispielsweise so eingerichtet sein, dass dieser eine Temperatur innerhalb eines Nahrungsmittels messen kann und eine Temperatur in der Umgebung des Nahrungsmittels und damit beim Nahrungsmittel.

Es können zwei verschiedene Zustandsparameter sein, die der Detektor messen kann. Ein Detektor kann beispielsweise so eingerichtet sein, dass dieser eine Temperatur und eine Feuchtigkeit innerhalb eines Nahrungsmittels messen kann. Ein Detektor kann beispielsweise so eingerichtet sein, dass dieser eine Temperatur und einen Druck innerhalb eines Schnellkochtopfes messen kann. Je genauer der Datenverarbeitungseinrichtung Zustandsparameter bekannt sind, um so genauer können von der Datenverarbeitungseinrichtung Vorhersagen getroffen und angepasst werden.

In einer Ausführung umfasst der Detektor eine Batterie, einen wiederaufladbaren Akku, eine Induktionsspule, einen Anschluss an eine externe Stromversorgung und/oder eine Energieerzeugungseinheit (engl. "Energy Harvesting Unit"), insbesondere zur Erzeugung von Strom mittels Bewegung, Licht und/oder Temperaturdifferenzen.

In einer Ausführung ist der Detektor ein Speisenthermometer und die Zustandsparameter sind Temperaturen.

Ein Speisenthermometer ist ein Temperaturmessgerät, welches dafür bestimmt und geeignet ist, Temperaturen in einem Nahrungsmittel bzw. Nahrungsmittel während seiner Zubereitung zu messen, um so ein Nahrungsmittel zuzubereiten. Ein Speisenthermometer kann daher Temperaturen messen, die bei der Zubereitung eines Nahrungsmittels auftreten können. Deutlich davon abweichende Temperaturen können nicht gemessen werden. Außerdem ist ein Speisenthermometer den Umgebungsbedingungen gewachsen, die während einer Zubereitung eines Nahrungsmittels auftreten können.

Ein Speisenthermometer im Sinne der vorliegenden Erfindung ist nicht so ausgelegt, dass sehr tiefe Temperaturen damit gemessen werden können wie zum Beispiel Temperaturen deutlich unterhalb von Minustemperaturen, wie diese in haushaltsüblichen Gefriertruhen oder Gefrierschränken erreicht werden. Ein Speisenthermometer im Sinne der vorliegenden Erfindung ist daher nicht so ausgelegt, dass es Temperaturen von weniger als -70°C messen kann. Grundsätzlich ist ein Speisenthermometer im Sinne der vorliegenden Erfindung so ausgelegt, dass es Temperaturen unterhalb von -50°C nicht mehr messen kann, weil Nahrungsmittel in der Regel unter Zufuhr von Wärme zubereitet werden und sehr tiefe Temperaturen lediglich für ein Einfrieren eines Nahrungsmittels angewendet werden.

Ein Speisenthermometer im Sinne der vorliegenden Erfindung kann einer Dampfatmosphäre widerstehen. Ein Speisenthermometer ist daher grundsätzlich wasserdicht gekapselt bzw. ein Gehäuse des Speisenthermometers ist wasserdicht. Ein Speisenthermometer im Sinne der vorliegenden Erfindung ist resistent gegenüber üblichen Zutaten wie zum Beispiel Säure von Zitronen oder Essig.

Ein Speisenthermometer kann dafür bestimmt und geeignet sein, in ein Nahrungsmittel hineingestochen zu werden, um eine Temperatur im Inneren des Nahrungsmittels messen zu können. Ein Speisenthermometer kann dafür einen langgestreckten Messfühler mit einem spitzen oder zumindest einem sehr dünnen Ende aufweisen, um den Messfühler auch in relativ feste Nahrungsmittel wie Fleisch hineinstechen zu können. Der Messfühler umfasst einen Sensor, mit dem eine Temperatur gemessen werden kann. Ein Speisenthermometer kann ein Griffteil aufweisen, das nicht dafür bestimmt ist, in das Nahrungsmittel hineingesteckt zu werden. Das Griffteil kann von einem Nutzer ergriffen werden, um das Speisenthermometer aus einem Nahrungsmittel wieder herausziehen zu können. Das Griffteil kann ebenfalls einen Sensor umfassen, mit dem eine Temperatur gemessen werden kann. Es kann dann auch die Umgebungstemperatur außerhalb eines Nahrungsmittels gemessen werden.

Das Speisenthermometer kann zwei Temperatursensoren umfassen. Diese können so angeordnet sein, dass eine Temperatur im Inneren des Nahrungsmittels und eine Temperatur außerhalb des Nahrungsmittels während der Zubereitung gemessen werden kann.

In der Regel werden bei der Zubereitung eines Nahrungsmittels Temperaturen von weniger als 200°C erreicht. Es können aber auch Temperaturen von 350°C erreicht werden, so zum Beispiel für das Backen einer Pizza. Temperaturen von mehr als 350°C werden grundsätzlich nicht überschritten. Ein Speisenthermometer im Sinne der vorliegenden Erfindung ist daher so eingerichtet, dass Temperaturen oberhalb von 400°C, vorzugsweise oberhalb von 300°C, besonders bevorzugt oberhalb von 250°C, nicht mehr gemessen werden können. Grundsätzlich ist das Speisenthermometer so eingerichtet, dass dieses in einem herkömmlichen Backofen eingesetzt werden kann, also bei Temperaturen von bis zu 250°C oder bis zu 220°C.

Ein Speisenthermometer im Sinne der vorliegenden Erfindung ist ein elektrisches Speisenthermometer, wenn es für seinen Betrieb elektrischen Strom benötigt. Ein elektrisches Speisenthermometer kann daher eine Batterie umfassen oder aber an eine externe elektrische Energiequelle angeschlossen werden, um mit elektrischem Strom versorgt zu werden.

Das System kann ein Rezept für die Zubereitung des Nahrungsmittels umfassen.

Ein Rezept ist eine Anleitung zur Zubereitung eines Nahrungsmittels. Ein Rezept kann Mengenangaben für einzelne Zutaten umfassen. Ein Rezept kann Angaben zu Zubereitungstemperaturen umfassen. Ein Rezept kann Angaben zu Zubereitungszeiten umfassen. Ein Rezept kann Angaben zu einem Küchengerät umfassen, das verwendet werden soll. Ein Rezept kann Angaben zu Einstellungen von einzustellenden Betriebszuständen des Küchengeräts umfassen. Ein Rezept kann ein Kochrezept oder Backrezept sein. Ein Rezept kann in gedruckter Form vorliegen. Ein Rezept kann elektronisch gespeichert sein.

Wird ein gedrucktes oder elektronisch gespeichertes Rezept in die Zubereitung einbezogen, so ist verbessert gewährleistet, dass ein Nahrungsmittel in immer gleicher Weise zubereitet wird. Es kann daher die Vorhersage verbessert werden.

Das Rezept kann ein digital gespeichertes Rezept sein, das eine Vorhersage für den zeitabhängigen Zustand der Zubereitung des Nahrungsmittels umfasst. Dabei kann die Datenverarbeitungseinrichtung so eingerichtet sein, dass diese die Vorhersage des Rezepts im Anschluss an eine durchgeführte Zubereitung des Nahrungsmittels durch das Küchengerät ändern kann. Ein Rezept kann beispielsweise zunächst die Angabe enthalten, dass ein Steak von 200 g bei einer vorgegebenen Einstellung eines Küchengeräts 2 Minuten von jeder Seite zu erhitzen ist. Wird ein Steak gebraten und der Temperaturverlauf mithilfe des Speisenthermometers überwacht, so kann die Datenverarbeitungseinrichtung feststellen, dass die gewünschte Zieltemperatur 10 Sekunden früher erreicht worden ist. Die Datenverarbeitungseinrichtung kann dann basierend auf diesem Messergebnis die Zeitdauer von 2 Minuten im Rezept verkürzen, so zum Beispiel auf 1 Minute und 55 Sekunden. Die Datenverarbeitungseinrichtung kann so eingerichtet sein, dass diese bei der Verkürzung der Zeitdauer Fehlertoleranzen berücksichtigt, die der Datenverarbeitungseinrichtung bekannt sind oder die die Datenverarbeitungseinrichtung aufgrund einer Mehrzahl von Zubereitungen von vergleichbaren Steaks ermittelt hat.

Das Rezept kann keine Vorhersage für den zeitabhängigen Zustand der Zubereitung des Nahrungsmittels umfassen. In diesem Fall umfasst das Rezept stattdessen eine Angabe über einen Zustand, den das Nahrungsmittel erreichen soll. Insbesondere kann die Angabe über einen Zustand, den das Nahrungsmittel erreichen soll, eine Temperatur sein. Die Angabe über einen Zustand, den das Nahrungsmittel erreichen soll, kann ebenso andere Zustandsparameter umfassen, z.B. Feuchtigkeit, Viskosität, Druck, Leitfähigkeit, Transparenz, Gewicht, Form, Größe oder Erscheinungsbild. Die Steuerungseinrichtung kann dann eine Information darüber erhalten, welcher Zustand erreicht werden soll und in Abhängigkeit davon die Zubereitung steuern und Vorhersagen treffen. Diese Ausgestaltung ist vor allem dann von Interesse, wenn das Rezept elektronisch gespeichert ist und die Datenverarbeitungseinrichtung die Zubereitung mithilfe des elektronisch gespeicherten Rezepts steuert. Die Steuerung kann umfassen, dass die Datenverarbeitungseinrichtung Betriebsparameter eines Küchengeräts selbstständig einstellt wie zum Beispiel eine Temperatur, auf welches ein Zubereitungsgefäß eines Küchengeräts gebracht werden soll sowie eine Zeitdauer für ein Erhitzen.

Die Datenverarbeitungseinrichtung kann so eingerichtet sein, dass diese mithilfe eines Detektors einen Garzustand des Nahrungsmittels während seiner Zubereitung durch das Nahrungsmittel in Abhängigkeit von der Zeit ermitteln kann. Die Datenverarbeitungseinrichtung kann so eingerichtet sein, dass diese einen erreichten Garzustand des Nahrungsmittels anzeigen kann, so zum Beispiel auf einem Display. Ein Nutzer kann dann den Garzustand verfolgen. Ein Nutzer kann dann beispielsweise ein Erhitzen manuell beenden oder verlängern, wenn er einen anderen Garzustand im Vergleich zu einem vorgegebenen Garzustand erhalten möchte.

Die Datenverarbeitungseinrichtung kann so eingerichtet sein, dass diese jeden möglichen zeitabhängigen Zustand einer Zubereitung eines Lebensmittels durch das Küchengerät vorhersagen kann. Die Datenverarbeitungseinrichtung kann so eingerichtet sein, dass sich jede dieser Vorhersagen im Anschluss an eine durchgeführte Zubereitung des Lebensmittels durch das Küchengerät ändert oder zumindest ändern kann.

Das System kann beispielsweise so eingerichtet sein, dass ein von einem Nutzer gewünschter Garzustand eingegeben werden kann. Die Datenverarbeitungseinrichtung kann so eingerichtet sein, dass diese einen Zeitpunkt für jeden gewünschten, möglichen Garzustand vorhersagen kann. Bei der Vorhersage kann die Datenverarbeitungseinrichtung einen vorbekannten Verlauf des zeitabhängigen Garzustands des Nahrungsmittels während seiner Zubereitung durch das Küchengerät berücksichtigen.

Die Datenverarbeitungseinrichtung kann eine Eingabeeinrichtung umfassen, über die der Datenverarbeitungseinrichtung das Nahrungsmittel mitgeteilt werden kann, welches durch das Küchengerät zubereitet werden soll.

Die Eingabeeinrichtung kann für eine manuelle, haptische, visuelle und/oder akustische Eingabe eingerichtet sein. Die Eingabeeinrichtung kann für eine Eingabe mittels digitalem, maschinenlesbarem Datenstrom eingerichtet sein. Die Datenverarbeitungseinrichtung kann eine Ausgabeeinrichtung umfassen. Die Ausgabeeinrichtung kann für eine manuelle, haptische, visuelle und/oder akustische Ausgabe von Daten eingerichtet sein. Die Ausgabeeinrichtung kann für eine Ausgabe mittels digitalem, maschinenlesbarem Datenstrom eingerichtet sein.

Die Datenverarbeitungseinrichtung kann so eingerichtet sein, dass die Vorhersage von dem Küchengerät abhängt, mit dem das Nahrungsmittel zubereitet wird. Gleiche Küchengeräte vom gleichen Hersteller verhalten sich nicht identisch. Zwei gleiche Küchengeräte können daher bei gleichen Einstellungen von Betriebsparametern dennoch unterschiedliche Zeiträume für eine Zubereitung benötigen. Die Datenverarbeitungseinrichtung kann so eingerichtet sein, dass diese dies berücksichtigt und folglich für jedes individuelle Küchengerät eine Vorhersage individuell erstellt und auch ändert. Die Zubereitung von Nahrungsmitteln kann so weiter verbessert werden.

Die Datenverarbeitungseinrichtung kann so eingerichtet sein, dass die Vorhersage von dem Betriebszustand des Küchengeräts abhängt, mit dem das Nahrungsmittel zubereitet wird. Die Datenverarbeitungseinrichtung erhält also Informationen über ein oder mehrere Betriebszustände des Küchengeräts. Ein Betriebszustand meint Konfigurationsparameter des Küchengeräts wie Oberhitze, Unterhitze, Drehgeschwindigkeit eines Werkzeugs für ein Mischen und/oder Zerkleinern oder eine Zieltemperatur. In Abhängigkeit davon erstellt die Datenverarbeitungseinrichtung Vorhersagen und ändert Vorhersagen für zukünftige Zubereitungen mit diesen Betriebszuständen.

Die Datenverarbeitungseinrichtung kann so eingerichtet sein, dass die Vorhersage für ein Küchengerät anders sein kann als die Vorhersage für ein gleiches, aber anderes, also nicht dasselbe Küchengerät.

Die Datenverarbeitungseinrichtung kann so eingerichtet sein, dass diese vorhersagen kann, dass ein geplanter Zustand des Nahrungsmittels mit einem eingestellten Betriebszustand des Küchengeräts nicht erreicht werden kann. Die Datenverarbeitungseinrichtung kann so eingerichtet sein, dass diese ein oder mehrere Betriebszustände ändern kann, wenn ein geplanter Zustand des Nahrungsmittels mit einem eingestellten Betriebszustand des Küchengeräts nicht erreicht werden kann. Alternativ oder ergänzend kann die Datenverarbeitungseinrichtung akustisch und/ oder optisch anleiten, welche ein oder mehrere Betriebszustände des Küchengeräts wie zu ändern sind, um einen gewünschten Zustand eines Nahrungsmittels erreichen zu können.

Die Vorhersage kann ein Zeitfenster umfassen, innerhalb dessen ein gewünschter Zustand des Nahrungsmittels erreicht wird. Ein Nutzer kann dann verbessert die Genauigkeit einer Vorhersage einschätzen.

Das System kann so eingerichtet sein, dass das Zeitfenster im Anschluss an eine durchgeführte Zubereitung des Nahrungsmittels durch das Küchengerät sich verändert, insbesondere kleiner wird.

In anderen Fällen, bspw. wenn Störungen oder Unregelmäßigkeiten in der Zubereitung erkannt werden, kann das Zeitfenster auch größer werden.

Die Vorhersage eines Zeitfensters meint die Vorhersage einer erwarteten minimalen und maximalen Zubereitungsdauer. Es kann zusätzlich auch eine erwartete mittlere Zubereitungszeit vorhergesagt werden.

Die Datenverarbeitungseinrichtung kann eingerichtet sein, eine wahrscheinliche Nutzerprofileigenschaft vorherzusagen. Weiter kann die Datenverarbeitungseinrichtung eingerichtet sein, eine Vorhersage zur Zubereitung eines Nahrungsmittels in Abhängigkeit von einer Nutzerprofileigenschaft zu treffen.

Eine Nutzerprofileigenschaft umfasst insbesondere Eigenschaften einer zubereitenden Person, z.B. Alter, Geschlecht oder Name, die Art eines Küchengeräts, z.B. Gas-, Elektro-, Induktionsherd, Mikrowelle, Eismaschine, Küchenmaschine, Dampfgarer oder Schnellkochtopf, die Eigenschaft eines Küchengeräts, z.B. Leistung, Zuverlässigkeit, Oberhitze, Unterhitze, Umluft, Überdruck, Unterdruck, sowie wahrscheinlicher Wert eines Konfigurations- bzw. Zustandsparameters, z.B. Temperatur des Nahrungsmittels zu Beginn der Zubereitung, Vorheizen oder Erhitzen des Küchengeräts vor Beginn der Zubereitung, Unterbrechung oder Störung der Zubereitung oder Zeit bis zur Entnahme des Nahrungsmittels nach Fertigstellung.

Die Eingabeeinrichtung und/oder die Ausgabeeinrichtung können so eingerichtet sein, dass die Datenverarbeitungseinrichtung mit einem menschlichen Nutzer und/oder einem anderen technischen System kommunizieren kann, insbesondere bzgl. relevanter Zustandsparameter, z.B. Rezept, Rezeptinhalt, Nahrungsmittelzustand, Zubereitungszeit, Nutzerprofileigenschaften oder Eigenschaft bzw. Konfigurationsparameter eines Küchengeräts.

Das System kann eine Speichereinheit umfassen, die so Speichereinheit eingerichtet ist, dass in der Speichereinheit Daten abgespeichert, gelesen verändert oder gelöscht werden können, z.B. ein Rezept, ein Rezeptinhalt, ein Nahrungsmittelzustand, eine Zubereitungszeit, eine Nutzerprofileigenschaft, eine Eigenschaft bzw. ein Konfigurationsparameter eines Küchengeräts, von einem Detektor gemessene Zustandsparameter im Zeitverlauf oder Vorhersagen des Systems.

Die Datenverarbeitungseinrichtung kann so eingerichtet sein, dass sie den Zustand eines Nahrungsmittels und/oder den Zeitpunkt für das Erreichen eines Zustands eines Nahrungsmittels vorhersagen kann. Bei der Vorhersage kann die Datenverarbeitungseinrichtung vom Detektor vor oder während der Zubereitung gemessene Werte, einen vorbekannten Verlauf des Zustands des Nahrungsmittels, Eigenschaften bzw. Konfigurationsparameter eines Küchengeräts und/oder Nutzerprofileigenschaften berücksichtigen.

Die Datenverarbeitungseinrichtung kann so eingerichtet sein, dass sie zur verbesserten Zubereitung einen Zustandsparameter und/oder eine Veränderung eines Konfigurationsparameters zur Zubereitung eines Nahrungsmittels vor Beginn und/oder während der Zubereitung eines Nahrungsmittels bestimmen bzw. mittels der Ausgabeeinheit ausgeben kann. Bei der Bestimmung kann die Datenverarbeitungseinrichtung von dem Detektor im Laufe der Zubereitung empfangene Messergebnisse und Vorgaben für Zustandsparameter berücksichtigen, insbesondere von einer Eingabeeinheit empfangene Vorgaben, z.B. Anfangs- und/oder Zielzustand des Nahrungsmittels, Zielzeitdauer der Zubereitung, Start- und/oder Endzeitpunkt der Zubereitung, Art des Küchengeräts oder Art der Zubereitung.

Die Datenverarbeitungseinrichtung kann eingerichtet sein, eine Vorhersage oder eine Bestimmung eines Zustandsparameters oder einer Eigenschaft mittels statistischer Verfahren und/oder mittels Methoden der Künstlichen Intelligenz zu generieren. Statistische Verfahren umfassen insbesondere deskriptive statistische Verfahren, z.B. Häufigkeitsverteilung, Mittelwert und/oder Median, sowie multivariate statistische Verfahren, z.B. Clusteranalyse und/oder Regressionsanalyse. Methoden der Künstlichen Intelligenz umfassen insbesondere Methoden des Maschinellen Lernens, z.B. Feedforward-Netze (FFN), Rekurrente Netze (RNN) und/oder Generative Netze (GN).

Das Küchengerät, die Datenverarbeitungseinrichtung, der Detektor, die Speichereinheit, die Eingabeeinrichtung und/oder die Ausgabeeinrichtung können nicht verteilt angeordnet sein, z.B. in einem Gerät und/oder an einem Ort. Das Küchengerät, die Datenverarbeitungseinrichtung, der Detektor, die Speichereinheit, die Eingabeeinrichtung und/oder die Ausgabeeinrichtung können verteilt angeordnet sein, z.B. über mehrere Geräte und/oder Orte verteilt.

Dabei kann ein Gerät z.B. ein Küchengerät, insbesondere eine Küchenmaschine, ein PC, Laptop, Tablet-Computer, Smartphone, Server oder ein Cloud-Computing-System sein.

Dabei kann ein Ort insbesondere ein Ort einer aktuellen Zubereitung, ein Ort einer vorhergehenden Zubereitung, der Standort eines menschlichen Nutzers, ein Standort eines Servers oder ein Standort eines Cloud-Computing-Systems sein.

Das Küchengerät, die Datenverarbeitungseinrichtung, der Detektor, die Speichereinheit, die Eingabeeinrichtung und/oder die Ausgabeeinrichtung können zur drahtgebundenen Kommunikation und/oder drahtlosen Kommunikation eingerichtet sein. Eine solche Kommunikation kann z.B. auf Basis von Protokollen oder Standards wie TCP/IP, IPX/SPX, X.25, AX.25, RFID, NFC, WLAN, Bluetooth, erfolgen.

Das erfindungsgemäße Verfahren betrifft die Zubereitung eines Nahrungsmittels mit einer Ausführung des erfindungsgemäßen Systems. Dabei wird das Nahrungsmittel durch ein Küchengerät zubereitet und ein Zeitraum für das Erreichen eines Zustands des Nahrungsmittels vorhergesagt. Zu einem späteren Zeitpunkt wird das gleiche Nahrungsmittel erneut durch das Küchengerät zubereitet. Dieses Mal sagt das System einen anderen Zeitraum für das Erreichen des Zustands des Nahrungsmittels vorher.

In einer Ausführung umfasst das erfindungsgemäße Verfahren einen oder mehrere der nachfolgenden Schritte a) bis f):
a. Veranlassen einer Speichereinheit, Messergebnisse von Parametern abzuspeichern, welche von einem Detektor im Laufe der Zubereitung eines Nahrungsmittels durch ein Küchengerät gemessen wurden;
b. Veranlassen einer Datenverarbeitungseinrichtung, die Dauer der Zubereitung eines Nahrungsmittels vor Beginn und/oder im Laufe der Zubereitung in Abhängigkeit von Messergebnissen von Parametern vorherzusagen, welche von einem Detektor im Laufe einer vorhergehenden Zubereitung des gleichen Nahrungsmittels gemessen und von einer Speichereinheit abgespeichert wurden;
c. Veranlassen einer Datenverarbeitungseinrichtung, eine minimale, mittlere und/oder maximale Zubereitungsdauer vorherzusagen;
d. Veranlassen einer Datenverarbeitungseinrichtung, eine Nutzerprofileigenschaft vorherzusagen, von einer Eingabeeinheit zu empfangen, in einer Speichereinheit zu speichern und/oder in einer Speichereinheit zu lesen;
e. Veranlassen einer Datenverarbeitungseinrichtung, Konfigurationsparameter eines Küchengeräts und/oder eine Veränderung von Konfigurationsparametern zur Zubereitung eines Nahrungsmittels vor Beginn und/oder im Laufe der Zubereitung eines Nahrungsmittels zu bestimmen, wobei die Datenverarbeitungseinrichtung bei der Bestimmung der Konfigurationsparameter die folgenden Faktoren berücksichtigen kann:
   i. Vorgaben für die Zubereitung des Nahrungsmittels, insbesondere von einer Ein-/Ausgabeeinheit empfangene Vorgaben, z.B. Anfangs- und/oder Zielzustand des Nahrungsmittels, Zielzeitdauer der Zubereitung, Start- und/oder Endzeitpunkt der Zubereitung, genutztes Küchengerät und/oder Art der Zubereitung,
   ii. Messergebnisse von Zustandsparametern, insbesondere von einem Detektor während der Zubereitung gemessene Zustandsparameter;
   iii. In einer Speichereinheit abgespeicherte Zustandsparameter, insbesondere im Laufe einer vorhergehenden Zubereitung des gleichen Nahrungsmittels abgespeicherte Zustandsparameter, und/oder
   iv. Vorhergesagte, empfangene und/oder gelesene Nutzerprofileigenschaft;
f. Veranlassen einer Datenverarbeitungseinrichtung zur Vorhersage und/oder Bestimmung von Zustandsparametern oder Eigenschaften, statistische Methoden und/oder Methoden der Künstlichen Intelligenz zu verwenden.

Das erfindungsgemäße Verfahren kann als Computerprogrammprodukt realisiert sein. Dabei umfasst das Computerprogrammprodukt ein Programm, welches geeignet ist, eine Ausführung des erfindungsgemäßen Verfahrens auszuführen, wenn das Programm auf einem Computer ausgeführt wird. Ein solches Computerprogrammprodukt kann z.B. auf einem Server zum Download bereitgestellt werden oder auf einem computerlesbaren Medium bzw. einer Speichereinheit abgespeichert sein. Zudem kann eine Datenverarbeitungseinrichtung zur Ausführung eines erfindungsgemäßen Verfahrens bzw. Computerprogrammprodukts eingerichtet sein.

### Es zeigen:

- Figur 1:: Küchenmaschine;
- Figur 2:: Aufheizkurven;
- Figur 3:: Aufheizkurve;

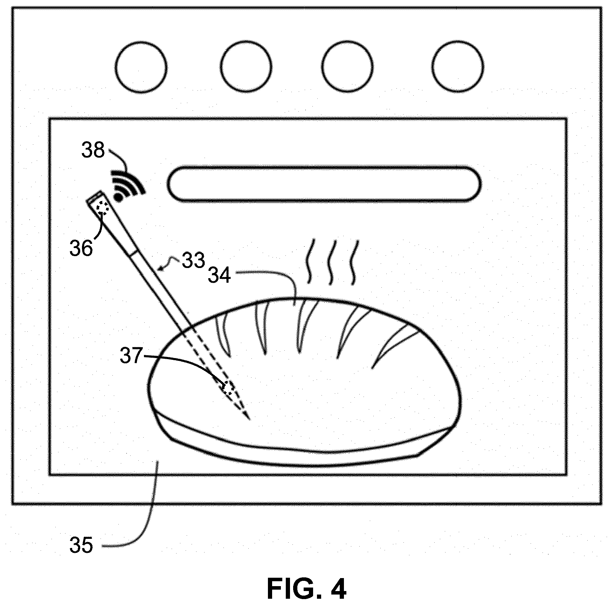

- Figur 4:: Speisenthermometer.

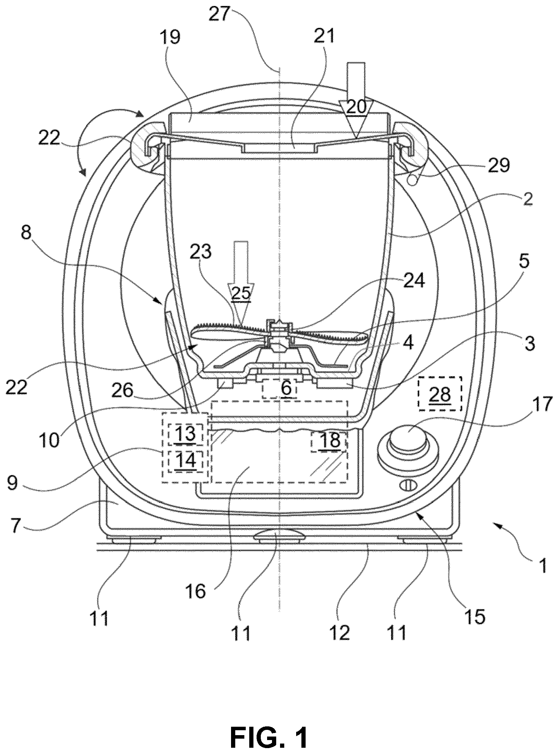

Die Figur 1 zeigt eine Küchenmaschine 1 zum Durchführen eines Zubereitungsvorgangs für Nahrungsmittel in einem Zubereitungsgefäß 2. Ein Heizelement 3 kann zum Erhitzen eines Nahrungsmittels insbesondere an einer Unterseite eines Bodens 4 des Zubereitungsgefäßes 2 installiert sein. Zum Zerkleinern und/oder Mischen des Nahrungsmittels kann ein drehbares erstes Werkzeug 5 insbesondere mit einer Schneidkante eingesetzt sein, das über eine nicht gezeigte Welle insbesondere durch eine Öffnung im Boden 4 des Zubereitungsgefäßes 2 mit einem Antrieb 6 zum motorisierten Drehen des Werkzeugs 5 gekoppelt ist oder werden kann. Das erste Werkzeug 5 kann ein Schneidwerkzeug sein. Das erste Werkzeug 5 kann stumpfe Kanten aufweisen, die Schneidkanten gegenüberliegen. Das erste Werkzeug 5 kann sich zentral in der Nähe des Bodens 4 des Zubereitungsgefäßes 2 befinden. Das erste Werkzeug 5 kann so mit dem Zubereitungsgefäß 2 verbunden sein, dass die Verbindung ohne Verwendung von Werkzeug gelöst werden kann.

In Abhängigkeit von der Drehgeschwindigkeit und der Drehrichtung kann ein Nahrungsmittel durch das erste Werkzeug nur gemischt oder auch zerkleinert werden. Ein Gehäuse 7 des Standteils der Küchenmaschine 1 umschließt den Antrieb 6 und stellt eine Aufnahme 8 für das Zubereitungsgefäß 2 bereit. Die Aufnahme 8 kann wie ein Behälter geformt sein. Die Aufnahme 8 kann einen nach unten aus der Aufnahme 8 herausführenden Abfluss aufweisen. Das Zubereitungsgefäß 2 kann aus der Aufnahme 8 herausgenommen und in die Aufnahme 8 eingesetzt werden. Der Antrieb 6 umfasst einen Elektromotor, der durch eine Datenverarbeitungseinrichtung 9 der Küchenmaschine 1 angesteuert werden kann. Insbesondere kann die Datenverarbeitungseinrichtung 9 Funktionskomponenten der Küchenmaschine 1 wie das Heizelement 3 und/oder den Antrieb 6 steuern. Messsensoren zum Erfassen eines Ist-Zustands wie z.B. ein Temperatursensor 10 können vorhanden sein. Insbesondere ist mindestens ein Gewichtssensor 11 in Standfüßen der Küchenmaschine 1, durch die das Gehäuse 7 auf einem Untergrund 12 steht, vorgesehen. Signale des mindestens einen Messensors zur Temperaturmessung oder Gewichtsmessung werden zur Datenverarbeitungseinrichtung 9 geleitet, um dort verarbeitet zu werden. Die Datenverarbeitungseinrichtung 9 umfasst einen Mikroprozessor 13 und einen Speicher 14.

Über eine Ein-/Ausgabeeinheit 15, die insbesondere ein Touchscreen-Display 16 und/oder einen Knopf 17 umfassen kann, kann ein Nutzer Informationen und Anweisungen von der Datenverarbeitungseinrichtung 9 erhalten und Eingaben für die Datenverarbeitungseinrichtung 9 tätigen. Vorzugsweise ist der Knopf 17 ein Drehknopf und/oder Druckknopf. Beispielsweise mithilfe des Drehknopfes 17 kann ein Nutzer Drehgeschwindigkeiten für das Werkzeug 5 einstellen und/oder Zieltemperaturen, die im Zubereitungsgefäß 2 erreicht werden sollen, und/oder Zeiträume für ein Drehen oder für ein Erhitzen.

Die Ein-/Ausgabeeinheit 15 kann ein durch den Nutzer auswählbares Bildzeichen 18 auf dem Touchscreen-Display 16 umfassen.

Vorzugsweise hat die Datenverarbeitungseinrichtung 9 Zugriff auf digital gespeicherte Rezepte mit mehreren Rezeptschritten, die mithilfe der Ein-/Ausgabeeinheit 15 durch den Nutzer und die Küchenmaschine zum Zubereiten von Nahrungsmitteln umgesetzt werden können. Digital gespeicherte Rezepte können beispielsweise in dem Speicher 14 gespeichert sein. Digital gespeicherte Rezepte können in einer externen Datenbank gespeichert sein, auf die die Datenverarbeitungseinrichtung 9 beispielsweise über das Internet oder ein Intranet zugreifen kann.

Ein Deckel 19 kann auf das Zubereitungsgefäß 2, wie durch den Pfeil 20 angedeutet, aufgesetzt werden, um die Öffnung des Zubereitungsgefäßes 2 ganz oder teilweise zu verschließen. Der Deckel 19 kann also vollständig geschlossen sein oder eine Öffnung 21 aufweisen. Der Deckel 19 kann einteilig gefertigt sein, so zum Beispiel aus Kunststoff durch Spritzguss. Der Deckel 19 kann mehrteilig sein.

Eine Verriegelungseinrichtung kann vorgesehen sein, um den Deckel 19 beispielsweise mit Walzen 22 wie in Figur 1 gezeigt durch eine mit Pfeilen illustrierte Schwenkbewegung im aufgesetzten Zustand zu verriegeln.

Die Küchenmaschine 1 kann ein zweites Werkzeug umfassen. Das zweite Werkzeug kann so mit dem Zubereitungsgefäß 2 verbunden oder in das Zubereitungsgefäß 2 eingesetzt werden, dass ein Nahrungsmittel mit dem zweiten Werkzeug 22 bearbeitet werden kann. Als Beispiel für ein zweites Werkzeug wird in der Figur 1 eine Kartoffelschälscheibe 22 gezeigt. Die Kartoffelschälscheibe 22 kann eine abrasive Struktur 23 auf ihrer Oberfläche haben. Die abrasive Struktur kann beispielsweise durch von der Oberfläche abstehende Zähne 23 gebildet sein.

Die Kartoffelschälscheibe 22 kann beispielsweise von oben auf einen nach oben abstehenden Kopf 24 der Welle des ersten Werkzeugs 5 manuell aufgesteckt werden, wie dies durch den Pfeil 25 angedeutet wird. Die Kartoffelschälscheibe 22 kann in umgekehrter Richtung wieder von dem Kopf 24 der Welle abgenommen werden.

Die Kartoffelschälscheibe 22 kann ein oder mehrere Mitnehmer 26 aufweisen. Der bzw. die Mitnehmer 26 können nach unten abstehen, wenn die Kartoffelschälscheibe 22 auf den Kopf 24 manuell aufgesteckt worden ist. Die Mitnehmer reichen dann zwischen sich radial erstreckende Arme des ersten Werkzeugs 5. Rotieren die Arme um die Achse 27, dann rotiert auch die Kartoffelschälscheibe 22. Kartoffeln, die sich auf der Kartoffelschälscheibe 22 befinden, werden dann geschält. Ein jeder Arm kann in einer ersten Drehrichtung gesehen seitlich eine Schneidkante für ein Zerkleinern aufweisen. Die gegenüberliegende Seite kann stumpf sein. Die Drehrichtung kann eingestellt werden, um wahlweise zerkleinern oder nur mischen zu können.

Die Küchenmaschine kann eine Funkeinheit 28 umfassen. Die Funkeinheit kann drahtlos Daten senden und/oder empfangen. Die Funkeinheit kann ein oder mehrere Funkstandards beherrschen. Mögliche Funkstandards sind Bluetooth wie zum Beispiel Bluetooth Low Energy, Wifi, ZigBee, Z-Wave, Thread und/oder einen Mobilfunkstandard wie LTE oder 5G.

Die Küchenmaschine kann einen Sensor 29 umfassen. Die Küchenmaschine 1 kann so eingerichtet sein, dass Betriebszustände von dem Sensor abhängen. Beispielsweise ist ein Betrieb nur möglich, wenn der Deckel 19 aufgesetzt und verriegelt ist und dies vom Sensor detektiert worden ist. Beispielsweise ist ein Betrieb nur im eingeschränkten Umfang möglich, wenn der Sensor detektiert, dass kein Deckel aufgesetzt und verriegelt ist.

Der Sensor 29 kann ein Kipphebel sein, der entgegen einer Federkraft heruntergedrückt ist, wenn der Deckel 19 aufgesetzt und verriegelt ist. Der Sensor 29 kann detektieren, ob der Deckel 19 aufgesetzt und verriegelt ist.

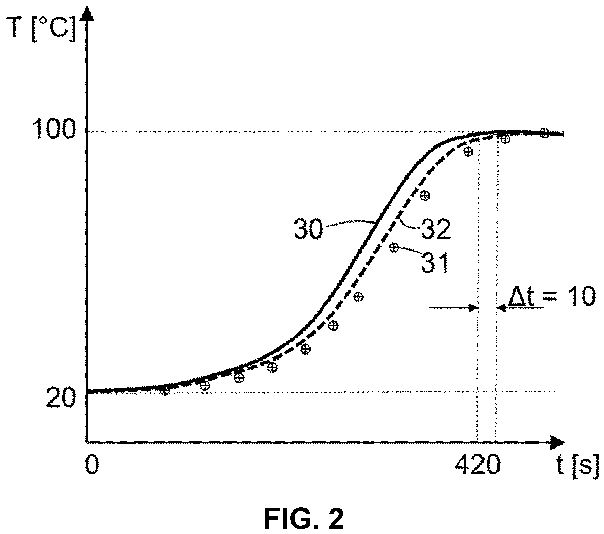

Die Figur 2 zeigt eine Aufheizkurve 30, die für die Zubereitung eines Nahrungsmittels, wie zum Beispiel einer Suppe, in dem Zubereitungsgefäß 2 der Küchenmaschine 1 in dem Speicher 14 oder in einer externen Datenbank gespeichert sein kann. Aufgetragen ist die Temperatur T gegen die Zeit t. Die Aufheizkurve 30 beginnt bei 20 °C und endet bei 100°C. Die Aufheizkurve 30 kann wie in der Figur 2 gezeigt so sein, dass sich der Temperaturanstieg zunächst beschleunigt, dann in einen linearen Verlauf übergeht und zum Ende hin abgebremst wird. Nach 420 Sekunden ist gemäß Aufheizkurve 30 die Temperatur von 100°C erreicht, wenn bei der Küchenmaschine als Zieltemperatur 100°C eingestellt wird. Wird nun ein gleiches Nahrungsmittel beispielsweise gemäß einem dafür vorgesehenen elektronisch gespeicherten Rezept zubereitet, so wird mithilfe des Temperatursensors 10 in vorgegebenen zeitlichen Abständen die Temperatur des Nahrungsmittels gemessen. Die Messwerte 31 werden aufgezeichnet. Die Datenverarbeitungseinrichtung 9 vergleicht beispielsweise kontinuierlich die Messwerte 31 mit dem erwarteten Verlauf gemäß der Aufheizkurve 30. Beispielsweise stellt die Datenverarbeitungseinrichtung 9 im Fall der in der Figur 2 gezeigten Messwerte 31 eine systematische Abweichung fest. Durch fortlaufendes Anpassen der Aufheizkurve 30 an die Messwerte 31 kann die Datenverarbeitungseinrichtung 9 die Vorhersage des zeitlichen Temperaturverlaufs fortlaufend aktualisieren. Ein Anpassen der Vorhersage kann in einem besonders einfachen Fall beispielsweise durch ein Verschieben der Aufheizkurve 30 entlang der T-Achse in Richtung der Messwerte 31 erfolgen. Die Datenverarbeitungseinrichtung 9 kann einem Nutzer beispielsweise über das Touchscreen-Display 16 eine aktualisierte Vorhersage für das Erreichen von 100°C anzeigen. Diese angezeigte Vorhersage kann fortlaufend während der Zubereitung aktualisiert werden. Diese angezeigte Vorhersage kann ein Zeitfenster umfassen, das eine Vorhersageunsicherheit berücksichtigt.

Im Anschluss an die Zubereitung kann die Datenverarbeitungseinrichtung 9 den Verlauf der Aufheizkurve 30 aufgrund der Messwerte 31 anpassen und eine neue aktualisierte Aufheizkurve 32 abspeichern. Wird ein gleiches Nahrungsmittel ein nächstes Mal gemäß dem gleichen Rezept zubereitet, dann wird sich die Vorhersage geändert haben. Es wird dann durch die Datenverarbeitungseinrichtung 9 nicht mehr vorhergesagt, dass 420 Sekunden für ein Aufheizen auf 100°C benötigt werden, sondern beispielsweise 430 Sekunden.

Das Rezept kann beispielsweise vor der Anpassung der Aufheizkurve 30 wie folgt abgespeichert worden sein. Die im Rezept genannten Stufen beziehen sich auf einzustellende Stufen für die Drehgeschwindigkeit des Misch- und Schneidwerkzeugs 5 der Küchenmaschine 1. Die Voreinstellung des Misch- und Schneidwerkzeugs 5 kann ein Rechtslauf sein. Das Rezept kann daher die Angabe "Linkslauf" umfassen, wenn diese Voreinstellung und damit dieser Konfigurationsparameter geändert werden soll. Die Temperaturangaben beziehen sich auf bei der Küchenmaschine 1 einzustellende Zieltemperaturen und damit wiederum auf einen Konfigurationsparameter der Küchenmaschine. Die Zeitangaben in dem Rezept beziehen sich auf Zeitdauern, die bei der Küchenmaschine einzustellen sind. Die Datenverarbeitungseinrichtung kann so eingerichtet sein, dass diese Konfigurationsparameter der Küchenmaschine 1 automatisiert einstellen kann.

Zutaten:
3 Stängel Minze (abgezupft, und etwas mehr zum Garnieren)
140 g Joghurt
6 Prisen Salz
3 Prisen Pfeffer
1 Zwiebel (halbiert)
10 g Ingwer (frisch, in dünnen Scheiben)
15 g Olivenöl
100 g Wasser
50 g Linsen (rote)
1 Dose Kokosmilch (400 g)
1 Dose Tomaten (400 g)
1 gehäufter Teelöffel Gewürzpaste für Gemüsebrühe (selbst gemacht oder 1 Würfel Gemüsebrühe für 0,5 I Wasser)
3 Prisen Chiliflocken
1 Teelöffel Zitronensaft
   1. Minze in das Zubereitungsgefäß geben, 5 Sekunden/Stufe 6 zerkleinern. In ein Schälchen (250 g) umfüllen, mit Joghurt, 1 Prise Salz und 1 Prise Pfeffer verrühren und zur Seite stellen.
   2. Zwiebel und Ingwer in das Zubereitungsgefäß geben, 5 Sekunden/Stufe 6 zerkleinern und mit dem Spatel nach unten schieben.
   3. Öl zugeben und 3 Min./120 °C/Stufe 1 (180 Sekunden/Varoma/Stufe 1) dünsten.
   4. Wasser, Linsen, Kokosmilch, Tomaten, Gewürzpaste, 6 Prisen Salz, 3 Prisen Pfeffer und Chiliflocken zugeben und 100 Sekunden/100 °C/ Linkslauf /Stufe 1 kochen. Suppe mit Zitronensaft würzen, abschmecken und mit dem Joghurt und Minzblättchen garniert anrichten.

Nachdem die Datenverarbeitungseinrichtung 9 die neue Aufheizkurve 32 ermittelt hat, kann die Datenverarbeitungseinrichtung 9 im vierten Schritt des Rezepts die Zeitdauer 1000 Sekunden in 1010 Sekunden abändern und die geänderte Zeitdauer abspeichern. Im Anschluss an die Zubereitung der Suppe findet sich damit im Rezept eine neue Vorhersage für die Dauer des vierten Zubereitungsschritts.

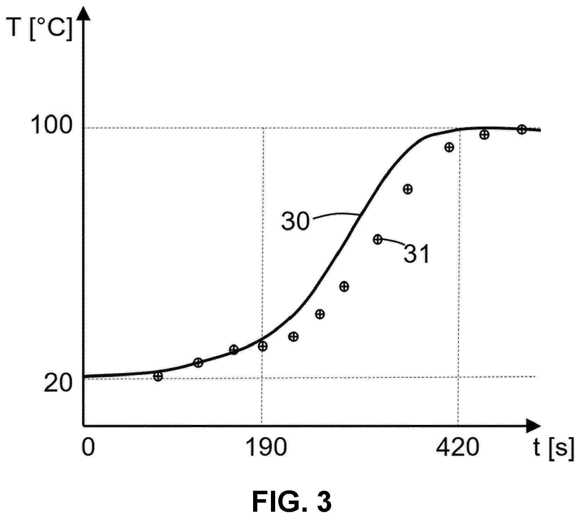

In der Figur 3 wird die Aufheizkurve 30 aus der Figur 2 gezeigt. Gezeigt werden außerdem Messwerte 31, die während der Zubereitung des gleichen Nahrungsmittels aufgezeichnet worden sind. Anfänglich entsprechen die Messwerte 31 dem Verlauf der Aufheizkurve 30. Nach ca. 190 Sekunden tritt jedoch eine systematische Abweichung der Messwerte 31 von dem Verlauf der Aufheizkurve 30 auf. Die Datenverarbeitungseinrichtung 9 kann im Anschluss daran die Vorhersage aktualisieren, so zum Beispiel durch Verschieben der Aufheizkurve 30 in Richtung der Messwerte 31, soweit diese nach den 190 Sekunden aufgezeichnet worden sind. Da jedoch anfänglich die Messwerte 31 dem Verlauf der Aufheizkurve 30 entsprachen, kann die Datenverarbeitungseinrichtung 9 auf eine Störung schließen, die die spätere Abweichung der Messwerte vom vorhergesagten Verlauf verursacht hat. In einem solchen Fall kann die Datenverarbeitungseinrichtung 9 so eingerichtet sein, dass nach der Zubereitung keine neue Aufheizkurve abgespeichert wird.

Die Figur 3 zeigt ein stiftförmiges Speisenthermometer 33, welches mit seiner Spitze in einen Brotteig 34 hineingesteckt ist. Der Brotteig 34 befindet sich in einem Backofen 35 und wird erhitzt. Das Speisenthermometer 33 umfasst einen Temperatursensor 36 beim Griff des Speisenthermometers 34 und einen Temperatursensor 37 bei seiner Spitze. Das Speisenthermometer 33 ermittelt daher Temperaturen räumlich aufgelöst. Durch eine Funkeinheit 38 übermittelt das Speisenthermometer 33 die Temperaturen, beispielsweise an die Datenverarbeitungseinrichtung 9 der Küchenmaschine 1. Durch die Datenverarbeitungseinrichtung 9 kann die Brotzubereitung gesteuert werden, so zum Beispiel mithilfe eines elektronisch gespeicherten Rezepts. Dies kann durch eine unmittelbare automatisierte Steuerung des Backofens 35 durch die Datenverarbeitungseinrichtung 9 geschehen oder aber durch Anweisungen an einen Nutzer, wie die Temperatur des Backofens 35, die Art der Temperaturzuführung und / oder die Anordnung des Brots 34 innerhalb des Backofens 35 einzustellen oder zu verändern ist. Mit Art der Temperaturzuführung sind Auswahlmöglichkeiten wie Oberhitze, Unterhitze oder Umluft gemeint. Mit Anordnung ist gemeint, wo im Backofen 35 sich das Brot 34 befinden soll.

Auch für diesen Fall kann die Steuereinrichtung 9 wie im Fall der Figuren 2 und 3 Vorhersagen aktualisieren. Es kann allerdings nun zwei Aufheizkurven geben und zwar eine Aufheizkurve für den Temperatursensor 36 und eine davon unabhängige Aufheizkurve für den Temperatursensor 37. Beide Aufheizkurven können unabhängig voneinander so von der Steuereinrichtung 9 verwendet und bearbeitet werden, wie dies zuvor für die Aufheizkurve 30 beschrieben worden ist. Wird eine signifikante Abweichung des Temperatursensors 36, der eine Temperatur in der Umgebung des Nahrungsmittels 34 ermittelt, von seiner Aufheizkurve festgestellt, so kann die Einstellung der Solltemperatur des Backofens 35 automatisiert oder durch einen Nutzer nachgeregelt werden. Alternativ oder ergänzend kann frühzeitig eine Vorhersage während einer Zubereitung auch deshalb angepasst werden, weil durch den Temperatursensor 36 eine signifikante Abweichung von seiner vorhergesagten Aufheizkurve festgestellt wird.

Anstelle der Datenverarbeitungseinrichtung 9 kann auch eine andere Datenverarbeitungseinrichtung vorgesehen sein.

## Patentansprüche

1. System umfassend ein Küchengerät (1, 35) für die Zubereitung eines Nahrungsmittels (34) und eine Datenverarbeitungseinrichtung (9), die so eingerichtet ist, dass diese einen zeitabhängigen Zustand einer Zubereitung eines Nahrungsmittels (34) durch das Küchengerät (1, 35) vorhersagt, wobei die Datenverarbeitungseinrichtung (9) so eingerichtet ist, dass sich die Vorhersage im Anschluss an eine durchgeführte Zubereitung des Nahrungsmittels (34) durch das Küchengerät (1, 35) ändert.

2. System nach dem vorhergehenden Anspruch, **dadurch gekennzeichnet, dass** dieses einen Detektor (10, 33) umfasst, und dass das System so eingerichtet ist, dass mit dem Detektor (10, 33) ein oder mehrere Zustandsparameter des Nahrungsmittels (34) oder beim Nahrungsmittel (34) während seiner Zubereitung durch das Küchengerät (1, 35) detektiert und an die Datenverarbeitungseinrichtung (9) übermittelt werden können und die Datenverarbeitungseinrichtung (9) so eingerichtet ist, dass diese den zeitabhängigen Zustand des Nahrungsmittels (34) in Abhängigkeit von den übermittelten ein oder mehreren Zustandsparametern vorhersagt und/oder die Vorhersage im Anschluss an eine durchgeführte Zubereitung des Nahrungsmittels (34) in Abhängigkeit von den während der Zubereitung des Nahrungsmittels (34) übermittelten ein oder mehreren Zustandsparametern ändert.

3. System nach dem vorhergehenden Anspruch, **dadurch gekennzeichnet, dass** der Detektor (10, 33) ein Speisenthermometer (33) ist und die ein oder mehreren Zustandsparameter ein oder mehrere Temperaturen sind.

4. System nach dem vorhergehenden Anspruch, **dadurch gekennzeichnet, dass** das Speisenthermometer (33) zwei Temperatursensoren (36, 37) umfasst, die so angeordnet sind, dass eine Temperatur im Inneren des Nahrungsmittels (34) und eine Temperatur außerhalb des Nahrungsmittels (34) während der Zubereitung gemessen werden kann.

5. System nach einem der vorhergehenden Ansprüche, **dadurch gekennzeichnet, dass** das System ein Rezept für die Zubereitung des Nahrungsmittels (34) umfasst.

6. System nach dem vorhergehenden Anspruch, **dadurch gekennzeichnet, dass** das Rezept ein digital gespeichertes Rezept ist, das eine Vorhersage für den zeitabhängigen Zustand der Zubereitung des Nahrungsmittels (34) umfasst, wobei die Datenverarbeitungseinrichtung (9) so eingerichtet ist, dass diese die Vorhersage des Rezepts im Anschluss an eine durchgeführte Zubereitung des Nahrungsmittels (34) durch das Küchengerät (1, 35) ändert,
oder dass das Rezept keine Vorhersage für den zeitabhängigen Zustand der Zubereitung des Nahrungsmittels (34) umfasst, sondern stattdessen eine Angabe über einen Zustand, den das Nahrungsmittel (34) erreichen soll.

7. System nach dem vorhergehenden Anspruch, **dadurch gekennzeichnet, dass** die Angabe über einen Zustand, den das Nahrungsmittel (34) erreichen soll, eine Temperatur ist.

8. System nach einem der vorhergehenden Ansprüche, **dadurch gekennzeichnet, dass** die Datenverarbeitungseinrichtung (9) so eingerichtet ist, dass diese einen Garzustand des Nahrungsmittels (34) während seiner Zubereitung durch den Detektor (10, 33) in Abhängigkeit von der Zeit ermitteln kann und/oder einen Zeitpunkt für einen gewünschten Garzustand vorhersagen kann und zwar unter Berücksichtigung eines vorbekannten Verlaufs (30) des zeitabhängigen Garzustands des Nahrungsmittels (34) während seiner Zubereitung durch das Küchengerät (1, 35).

9. System nach einem der vorhergehenden Ansprüche, **dadurch gekennzeichnet, dass** die Datenverarbeitungseinrichtung (9) eine Eingabeeinrichtung umfasst, über die der Datenverarbeitungseinrichtung (9) das Nahrungsmittel mitgeteilt werden kann, welches durch das Küchengerät (1, 35) zubereitet werden soll.

10. System nach einem der vorhergehenden Ansprüche, **dadurch gekennzeichnet, dass** die Datenverarbeitungseinrichtung (9) so eingerichtet ist, dass die Vorhersage von dem Küchengerät (1, 35) abhängt, mit dem das Nahrungsmittel (34) zubereitet wird und/oder dass die Vorhersage von dem Betriebszustand des Küchengeräts (1, 35) abhängt, mit dem das Nahrungsmittel zubereitet wird.

11. System nach einem der vorhergehenden Ansprüche, **dadurch gekennzeichnet, dass** die Datenverarbeitungseinrichtung (9) so eingerichtet ist, dass die Vorhersage für ein Küchengerät (1, 35) anders sein kann als die Vorhersage für ein anderes gleiches Küchengerät (1, 35).

12. System nach einem der vorhergehenden Ansprüche, **dadurch gekennzeichnet, dass** die Datenverarbeitungseinrichtung (9) so eingerichtet ist, dass diese vorhersagen kann, dass ein geplanter Zustand des Nahrungsmittels (34) mit einem eingestellten Betriebszustand des Küchengeräts (1, 35) nicht erreicht werden kann.

13. System nach einem der vorhergehenden Ansprüche, **dadurch gekennzeichnet, dass** die Vorhersage ein Zeitfenster umfasst, innerhalb der ein gewünschter Zustand des Nahrungsmittels (34) erreicht wird.

14. System nach dem vorhergehenden Anspruch, **dadurch gekennzeichnet, dass** das System so eingerichtet ist, dass das Zeitfenster im Anschluss an eine durchgeführte Zubereitung des Nahrungsmittels (34) durch das Küchengerät (1, 35) kleiner wird.

15. Verfahren für die Zubereitung eines Nahrungsmittels (34) mit einem System nach einem der vorhergehenden Ansprüche, wobei das Nahrungsmittel durch das Küchengerät (1, 35) des Systems zubereitet wird und einen Zeitraum für das Erreichen eines Zustands des Nahrungsmittels (34) durch das System vorhergesagt wird, wobei im Anschluss daran das gleiche Nahrungsmittel durch das Küchengerät (1, 35) des Systems erneut zubereitet wird und das System einen anderen Zeitraum für das Erreichen des Zustands des Nahrungsmittels (34) durch das System vorhergesagt.
